# EUROPEAN PATENT APPLICATION

(11) **EP 4 070 882 A1**
(43) Date of publication of application: **12.10.2022**
(21) Application number: 20910822.4
(22) Date of filing: 02.12.2020
(51) Int. Cl.: B01J 8/18, B01J 8/24, C01D 15/02, C01D 15/08, H01M 10/54

(54) **FLUIDIZED BED REACTOR AND METHOD FOR RECOVERING ACTIVE METAL FROM LITHIUM SECONDARY BATTERY THEREBY**

(30) Priority: 30.12.2019 KR 20190178430
(71) Applicant: SK Innovation Co., Ltd., Seoul 03188 (KR)
(72) Inventor: SON, Sung Real, Daejeon 34124 (KR); SUNG, Min Ji, Daejeon 34124 (KR); HA, Hyeon Bae, Daejeon 34124 (KR); KIM, Ji Min, Daejeon 34124 (KR)
(74) Representative: Thoma, Michael
(86) International application number: PCT/KR2020/017486
(87) International publication number: WO 2021/137453

(57) **Abstract**

A method of recovering an active metal of a lithium secondary battery according to embodiments of the present invention includes preparing a waste cathode active material mixture obtained from a waste cathode of a lithium secondary battery, forming a preliminary precursor mixture by reacting the waste cathode active material mixture with a reactive gas in a fluidized bed reactor, and selectively recovering a lithium precursor from the preliminary precursor mixture. The fluidized bed reactor includes a reactor body and a horizontal expansion bed, and a ratio of a diameter of the horizontal expansion bed relative to a diameter of the reactor body is 3 or more to improve a recovery efficiency of a lithium secondary battery.

## Description

### [TECHNICAL FIELD]

The present invention relates to a method of recovering an active metal of a lithium secondary battery. More particularly, the present invention relates to a method of recovering an active metal of a lithium secondary battery utilizing a fluidized bed reactor.

### [BACKGROUND ART]

Recently, a secondary battery has been widely employed as a power source of a mobile electronic device such as a camcorder, a mobile phone, a laptop computer, etc., and a vehicle such as an electric vehicle, a hybrid vehicle, etc. A lithium secondary battery is highlighted among the secondary battery due to advantages such as high operational voltage and energy density per unit weight, a high charging rate, a compact dimension, etc.

A lithium metal oxide may be used as an active material for a cathode of the lithium secondary battery. The lithium metal oxide may further contain a transition metal such as nickel, cobalt, manganese, etc.

As the above-mentioned high-cost valuable metals are used for the cathode active material, 20% or more of a production manufacturing cost is required for manufacturing the cathode material. Additionally, as environment protection issues have recently been highlighted, a recycling method of the cathode active material is being researched.

Conventionally, a method of sequentially recovering the valuable metals by leaching a waste cathode active material in a strong acid such as sulfuric acid has been used, but the wet process may be disadvantageous in aspect of a regeneration selectivity and a regeneration time, and may cause environmental pollution. Therefore, a method for recovering the valuable metals using a dry-based reaction through a contact with a reactive gas is being researched.

However, as a size of the active material particles supplied for a dry reaction becomes decreased, a non-uniform reaction may occur due to an aggregation. Further, a recovery ratio of the active material may be reduced due to a local non-uniform supply of a reactive gas in a reactor.

For example, Korean Registered Patent Publication No. 10-0709268 discloses an apparatus and a method for recycling a waste manganese battery and an alkaline battery, but does not provide a dry-based method for regenerating valuable metals with high selectivity and high yield.

### DETAILED DECRIPTIONS OF THE INVENTION

### [Technical Objective]

According to an aspect of the present invention, there is provided a method of recovering an active metal of a lithium secondary battery with improved recovery efficiency.

### [Technical Means]

In a method of recovering an active metal of a lithium secondary battery, a waste cathode active material mixture obtained from a waste cathode of a lithium secondary battery is prepared. A preliminary precursor mixture is formed by reacting the waste cathode active material mixture with a reactive gas in a fluidized bed reactor. A lithium precursor is selectively recovered from the preliminary precursor mixture. The fluidized bed reactor includes a reactor body and a horizontal expansion bed, and a ratio of a diameter of the horizontal expansion bed relative to a diameter of the reactor body is 3 or more.

In some embodiments, the forming the preliminary precursor mixture may include lowering the waste cathode active material mixture or the preliminary precursor mixture raised from the reactor body to the horizontal expansion bed by the reactive gas to be gathered in the reactor body.

In some embodiments, the ratio of the diameter of the horizontal expansion bed relative to the diameter of the reactor body may be from 3 to 10.

In some embodiments, the fluidized bed reactor may further include a vertical expansion tube connecting the reactor body and the horizontal expansion bed.

In some embodiments, an inclination angle of the vertical expansion tube may be from 45 to 80 °.

In some embodiments, the reactive gas may include hydrogen.

In some embodiments, in the recovering the lithium precursor, the preliminary precursor mixture may be washed with water.

A fluidized bed reactor according to embodiments of the present invention includes a reactor body; a horizontal expansion bed being connected with the reactor body and having a diameter of at least three times a diameter of the reactor body; a vertical expansion tube connecting the reactor body and the horizontal expansion bed; and a gas injection path for injecting a reactive gas into the reactor body.

### [Effects of the Invention]

In a method of recovering an active metal of a lithium secondary battery according to exemplary embodiments, a fluidized bed reactor in which a ratio of a diameter of a horizontal expansion bed relative to a diameter of a reactor body is 3 or more may be used to prevent a preliminary precursor mixture from being leaked to an outside or accumulated on a wall surface during a formation of the preliminary precursor mixture. An injection rate of a reactive gas injected into the fluidized bed reactor may be improved so that a fluidized bed may be more easily formed, and thus a recovery efficiency of a lithium precursor may be improved.

In a method of recovering an active metal of a lithium secondary battery according to exemplary embodiments, a fluidized bed reactor including a vertical expansion tube that satisfies a specific inclination angle may be used to reduce an amount of the preliminary precursor mixture leaking to the outside. Further, the preliminary precursor mixture may be introduced back into the reactor body along an inclined surface of the vertical expansion tube to improve the recovery efficiency of the lithium precursor.

### [Brief Descriptions of the Drawings]

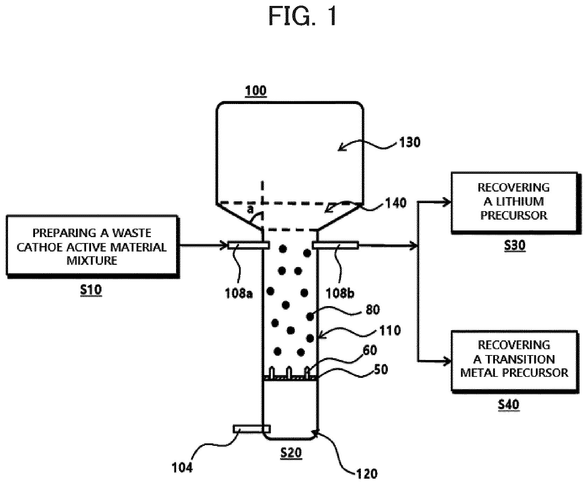

FIG. 1 is a schematic diagram for describing a fluidized bed reactor and a method of recovering an active metal of a lithium secondary battery utilizing the same in accordance with exemplary embodiments.

### [Embodiments for Practicing the Invention]

Embodiments of the present invention provide a method of recovering an active metal with high purity and high yield using a fluidized bed reactor in which a ratio of a diameter of a horizontal expansion bed relative to a diameter of a reactor body is 3 or more.

Hereinafter, embodiments of the present invention will be described in detail with reference to the accompanying drawings. However, the embodiments are provided as examples and the present invention is not limited to the specific embodiments described herein.

As used herein, the term "precursor" is used to comprehensively refer to a compound including a specific metal to provide the specific metal included in an electrode active material.

Referring to FIG. 1, a waste cathode active material mixture may be prepared from a waste cathode of a lithium secondary battery (e.g., in a process of S10).

The lithium secondary battery may include an electrode assembly including a cathode, an anode, and a separation layer interposed between the cathode and the anode. The cathode and the anode may include a cathode active material layer and an anode active material layer coated on a cathode current collector and an anode current collector, respectively.

For example, the cathode active material included in the cathode active material layer may include an oxide containing lithium and a transition metal.

In some embodiments, the cathode active material may include a compound represented by Chemical Formula 1 below.

[Chemical Formula 1] LiₓM1ₐM2_{b}M3_{c}O_{y}

In Chemical Formula 1, M1, M2 and M3 may each be a transition metal selected from Ni, Co, Mn, Na, Mg, Ca, Ti, V, Cr, Cu, Zn, Ge, Sr, Ag, Ba, Zr, Nb, Mo, Al, Ga or B. In Chemical Formula 1, 0<x≤1.1, 2≤y≤2.02, 0<a<1, 0<b<1, 0<c<1, and 0<a+b+c≤1.

In some embodiments, the cathode active material may be an NCM-based lithium oxide including nickel, cobalt and manganese.

The waste cathode may be recovered by separating the cathode from the waste lithium secondary battery. The waste cathode may include the cathode current collector (e.g., aluminum (Al)) and the cathode active material layer as described above, and the cathode active material layer may include a conductive material and a binder together with the cathode active material as described above.

The conductive material may include, e.g., a carbon-based material such as graphite, carbon black, graphene and carbon nanotube. The binder may include a resin material, e.g., vinylidenefluoride-hexafluoropropylene copolymer (PVDF-co-HFP), polyvinylidenefluoride (PVDF), polyacrylonitrile, polymethylmethacrylate, etc.

In exemplary embodiments, the recovered waste cathode may be pulverized to produce a waste cathode active material mixture. Accordingly, the waste cathode active material mixture may be prepared in a powder form. As described above, the waste cathode active material mixture may include a powder of the lithium-transition metal oxide, e.g., a powder of the NCM-based lithium oxide (e.g., Li(NCM)O₂).

The term "waste cathode active material mixture" used in the present application may refer to a raw material that is input to a fluidized bed reaction treatment to be described later after the cathode current collector is substantially removed from the waste cathode. In an embodiment, the waste cathode active material mixture may include cathode active material particles such as the NCM-based lithium oxide. In an embodiment, the waste cathode active material mixture may include portions of components derived from the binder or the conductive material. In an embodiment, the waste cathode active material mixture may substantially consist of the cathode active material particles.

In some embodiments, an average particle diameter (D50) of the waste cathode active material mixture may be from 5 to 100*µ*m. Within the above range, a lithium-transition metal oxide such as Li(NCM)O₂ to be recovered may be easily separated from the cathode current collector, the conductive material and the binder included in the waste cathode active material mixture.

In some embodiments, the waste cathode active material mixture may be heat-treated before being input into a fluidized bed reactor to be described later. Impurities such as the conductive material and the binder included in the waste cathode active material mixture may be substantially removed or reduced by the heat treatment, so that the lithium-transition metal oxide may be introduced into the fluidized bed reactor with high purity

A temperature of the heat treatment may be, e.g., from about 100 to 500 °C, preferably from about 350 to 450 °C. Within the above range, the impurities may be substantially removed while preventing decomposition and damages of the lithium-transition metal oxide.

For example, in a process of S20, the waste cathode active material mixture may be reacted in a fluidized bed reactor 100 with a reactive gas to form a preliminary precursor mixture 80.

As illustrated in FIG. 1, the fluidized bed reactor 100 may be divided into a reactor body 110, a lower reactor portion 120 and a horizontal expansion bed 130. The reactor body 110 may include or may be integrated with a heating tool such as a heater.

A lower portion under a dispersion plate 50 in the reactor body 110 may be defined as the lower reactor portion 120.

The waste cathode active material mixture may be supplied into the reactor body 110 through a supply flow path 108a. The waste cathode active material mixture may be dropped through a supply flow path 108a connected to an upper portion of the reactor body 110. In an embodiment, the waste cathode active material mixture may also be introduced through a supply flow path (not illustrated) connected to a lower portion of the reactor body 110.

The reactive gas for converting the waste cathode active material mixture into a preliminary precursor may be supplied into the reactor body 110 through a gas flow path 104 connected to the lower reactor portion 120. In exemplary embodiments, the reactive gas may include a reductive gas. For example, hydrogen (H₂) may be supplied.

The reactive gas may be discharged into the reactor body 110 through injection columns 60 included in the dispersion plate. The reactive gas may be supplied from a bottom portion of the fluidized bed reactor 100 to be in contact with the waste cathode active material mixture, so that the waste cathode active material mixture may react with the reactive gas while moving to the horizontal expansion bed 130 to be converted into the preliminary precursor mixture 80.

For example, a ratio of a diameter of the horizontal expansion bed 130 relative to a diameter of the reactor body 110 may be 3 or more. Preferably, the diameter ratio may be from 3 to 10, and, more preferably, the diameter ratio may be from 3 to 5.

The diameter may be measured based on a central axis of the fluidized bed reactor 100 and an inner wall of the fluidized bed reactor 100. In this case, a flow rate of the preliminary precursor mixture 80 or the reactive gas moved from the reactor body 110 to the horizontally expansion bed 130 may be rapidly reduced. Accordingly, a moving velocity of the preliminary precursor mixture 80 may be less than a terminal velocity (ut), so that an amount of the preliminary precursor mixture 80 leaking out of the reactor body 110 may be effectively reduced.

For example, the ratio of the diameter of the horizontal expansion bed 130 relative to the diameter of the reactor body 110 may be from 3 to 10. For example, if the diameter ratio is less than 3, the diameter of the horizontal expansion bed 130 of the fluidized bed reactor 100 may not be sufficiently increased, and a sufficient velocity reduction effect may not be obtained. If the diameter ratio exceeds 10, the size of the horizontal expansion bed 130 may be excessively increased to degrade an overall process efficiency.

For example, the fluidized bed reactor 100 may further include a vertical expansion tube 140 connecting the reactor body 110 and the horizontal expansion bed 130. The vertical expansion tube 140 may mean a region in which a diameter is gradually increased with a constant inclination angle (a) as the diameter of the horizontal expansion bed 130 is increased relatively to the diameter of the reactor body 110. For example, the inclination angle (a) may be defined as an angle formed between a vertical extension line with respect to a lateral surface of the reactor body 110 and an inclined surface of the vertical expansion tube 140.

For example, the inclination angle (a) of the vertical expansion tube 140 may be from about 45 to 80°. More preferably, the inclination angle (a) of the vertical expansion tube 140 may be from about 60 to 80°. For example, within the inclination angle range, the effective velocity reduction of the preliminary precursor mixture 80 may be implemented without unnecessarily increasing an area of the horizontal expansion bed 130 included in the fluidized bed reactor 100.

Additionally, the descending preliminary precursor mixture 80 having the reduced velocity may re-introduced into the reactor body 110 along the inclined surface of the vertical expansion tube 140, so that the recovery efficiency of the lithium precursor may be further improved.

In some exemplary embodiments, the fluidized bed reactor 100 may include a gas injection path 104 for injecting a reactive gas into the reactor body 110.

The reactive gas may be injected into the reactor body 110 by sequentially passing through the gas injection path 104, the base plate 50 and the injection column 60.

In some embodiments, the lithium-transition metal oxide may be reduced by the hydrogen gas to generate a preliminary lithium precursor including, e.g., lithium hydroxide (LiOH), lithium oxide (e.g., LiO₂), and a transition metal or a transition metal oxide. For example, Ni, Co, NiO, CoO and MnO may be produced together with the preliminary lithium precursor by the reductive reaction.

The reductive reaction in the reactor body 110 may be performed at a temperature from about 400 to 700 °C, preferably from 450 to 550 °C. Within the reaction temperature range, the reductive reaction may be promoted without causing reaggregation and recombination of the preliminary lithium precursor and the transition metal/transition metal oxide.

In some embodiments, a carrier gas may be supplied together with the reactive gas from the lower reactor portion 120. For example, the carrier gas may be supplied together with the reactive gas through the gas flow path 104. For example, the carrier gas may include an inert gas such as nitrogen (N₂) or argon (Ar). The carrier gas may also be discharged and supplied through the dispersion columns 60 of the dispersion plate to promote the fluidized bed formation. For example, a cyclone formation through the carrier gas may be promoted.

The preliminary precursor mixture 80 including the preliminary lithium precursor and a preliminary transition metal precursor (e.g., the transition metal or the transition metal oxide) may be formed in the reactor body 110. The preliminary lithium precursor may include, e.g., lithium hydroxide, lithium oxide and/or lithium carbonate.

For example, the preliminary precursor mixture 80 may be cooled. In this case, the preliminary precursor mixture 80 may be cooled using a gaseous refrigerant or a liquid refrigerant.

For example, the preliminary precursor mixture 80 may be cooled to about 100 °C or less. More preferably, the preliminary precursor mixture 80 may be cooled to a temperature in a range from about 50 to 100 °C. For example, if the preliminary precursor mixture 80 is cooled to the above temperature range, the recovery efficiency of the lithium precursor may be improved when recovering the lithium precursor which will be described later.

A lithium precursor may be selectively recovered from the cooled preliminary precursor mixture 80 (e.g., in a process of S30).

In some embodiments, the cooled preliminary precursor mixture 80 may be washed with water. The preliminary lithium precursor particles in the form of lithium hydroxide (LiOH) may be substantially dissolved in water by the washing treatment, separated from the transition metal precursor, and recovered in advance. The lithium precursor substantially consisting of lithium hydroxide may be obtained through a crystallization process, etc., of lithium hydroxide dissolved in water.

In an embodiment, the preliminary lithium precursor particles in the form of lithium oxide and lithium carbonate may be substantially removed through the washing treatment. In an embodiment, the preliminary lithium precursor particles in the form of lithium oxide and lithium carbonate may be at least partially converted into lithium hydroxide through the washing treatment.

In some embodiments, the preliminary lithium precursor may be reacted with a carbon-containing gas such as carbon monoxide (CO), carbon dioxide (CO₂), etc., to obtain lithium carbonate (e.g., Li₂CO₃) as the lithium precursor. A crystallized lithium precursor may be obtained through the reaction with the carbon-containing gas. For example, lithium carbonate may be collected by injecting the carbon-containing gas together during the washing treatment.

In some embodiments, a transition metal precursor may be obtained from the preliminary transition metal precursor (e.g., in a process of S40).

For example, the preliminary lithium precursor may be collected from an outlet 108b, and then the preliminary transition metal precursor may be recovered. Thereafter, the preliminary transition metal precursor may be treated with an acid solution to form precursors in the form of acid salts of each transition metal.

In an embodiment, sulfuric acid may be used as the acid solution. In this case, NiSO₄, MnSO₄ and CoSO₄ may each be recovered as the transition metal precursor.

As described above, the lithium precursor may be collected through a dry process, and then the transition metal precursors may be selectively extracted using the acid solution, so that purity and selectivity of each metal precursor may be improved, and a load of the wet process may be reduced, and amount of wastewater and by-products may also be reduced.

Hereinafter, preferred embodiments are proposed to more concretely describe the present invention. However, the following examples are only given for illustrating the present invention and those skilled in the related art will obviously understand that these examples do not restrict the appended claims but various alterations and modifications are possible within the scope and spirit of the present invention. Such alterations and modifications are duly included in the appended claims.

### Example 1

100 kg of a cathode material separated from a waste lithium secondary battery was heat-treated at 450 °C for 1 hour. The heat-treated cathode material was cut into small units and milled to obtain a sample of the Li-Ni-Co-Mn oxide cathode active material.

10 kg of the cathode active material sample was loaded into a fluidized bed reactor in which a ratio of a diameter of a horizontal expansion bed relative to a diameter of the reactor body was 4, and a nitrogen gas was injected from a bottom of the reactor at a flow rate of 100 L/min. A temperature at an inside of the reactor was maintained at 450 °C.

An amount of the cathode active material leaked to an outside of the reactor was measured, and a result of calculating a leaked amount per hour is shown in Table 1 below.

### Examples 2-3 and Comparative Example 1

Amounts of the cathode active material leaked to the outside of the reactor was measured by the same method as that in Example 1, except that ratios of a diameter of the horizontal expansion bed relative to the diameter of the reactor body were adjusted as shown in Table 1, and the leaked amounts per hour were calculated.

**[Table 1]**

| No. | Diameter ratio | Amount of cathode active material leaked out of the reactor [wt%/h] |
|---|---|---|
| Example 1 | 4 | 0.7 |
| Example 2 | 3 | 1.2 |
| Example 3 | 10 | 0.0 |
| Comparative Example 1 | 2 | 38.7 |

Referring to Table 1, when the ratio of the diameter of the horizontal expansion bed relative to the diameter of the reactor body was 3 or more, the amount of the cathode active material flowing out of the reactor was reduced.

**[Descriptions of Reference Numerals]**

| | | | |
|---|---|---|---|
| 50: | base plate | 60: | injection column |
| 80: | preliminary precursor mixture | 100: | fluidized bed reactor |
| 104: | gas flow path | 110: | reactor body |
| 120: | lower reactor portion | 130: | horizontal expansion bed |
| 140: | vertical expansion tube | a: | inclination angle |

## Claims

1. A method of recovering an active metal of a lithium secondary battery, comprising:
preparing a waste cathode active material mixture obtained from a waste cathode of a lithium secondary battery;
forming a preliminary precursor mixture by reacting the waste cathode active material mixture with a reactive gas in a fluidized bed reactor; and
selectively recovering a lithium precursor from the preliminary precursor mixture,
wherein the fluidized bed reactor comprises a reactor body and a horizontal expansion bed, and a ratio of a diameter of the horizontal expansion bed relative to a diameter of the reactor body is 3 or more.

2. The method of recovering an active metal of a lithium secondary battery of claim 1, wherein the forming the preliminary precursor mixture comprises lowering the waste cathode active material mixture or the preliminary precursor mixture raised from the reactor body to the horizontal expansion bed by the reactive gas to be gathered in the reactor body.

3. The method of recovering an active metal of a lithium secondary battery of claim 1, wherein the ratio of the diameter of the horizontal expansion bed relative to the diameter of the reactor body is from 3 to 10.

4. The method of recovering an active metal of a lithium secondary battery of claim 1, wherein the fluidized bed reactor further comprises a vertical expansion tube connecting the reactor body and the horizontal expansion bed.

5. The method of recovering an active metal of a lithium secondary battery of claim 4, wherein an inclination angle of the vertical expansion tube is from 45 to 80 °.

6. The method of recovering an active metal of a lithium secondary battery of claim 1, wherein the reactive gas comprises hydrogen.

7. The method of recovering an active metal of a lithium secondary battery of claim 1, wherein the recovering the lithium precursor comprises washing the preliminary precursor mixture with water.

8. A fluidized bed reactor, comprising:
a reactor body;
a horizontal expansion bed being connected with the reactor body and having a diameter of at least three times a diameter of the reactor body;
a vertical expansion tube connecting the reactor body and the horizontal expansion bed; and
a gas injection path for injecting a reactive gas into the reactor body.
